# EUROPÄISCHE PATENTSCHRIFT

(11) **EP 3 045 347 B1**
(45) Veröffentlichungstag und Bekanntmachung des Hinweises auf die Patenterteilung: **20.11.2019**
(21) Anmeldenummer: 16000078.2
(22) Anmeldetag: 14.01.2016
(51) Int. Cl.: B60N 2/80

(54) **LAGERVORRICHTUNG UND KOPFSTÜTZE**
BEARING DEVICE AND HEADREST
DISPOSITIF DE STOCKAGE ET APPUI-TETE

(30) Priorität: 14.01.2015 DE 102015000108
(43) Veröffentlichungstag der Anmeldung: 20.07.2016
(73) Patentinhaber: GRAMMER AG, 92224 Amberg (DE)
(72) Erfinder: Bösl, Manuel, 92272 Freudenberg (DE)
(74) Vertreter: Roche, von Westernhagen & Ehresmann

(56) Entgegenhaltungen:
- DE-A1- 19 945 585
- DE-B4-102005 043 811

## Beschreibung

Die Erfindung betrifft zunächst eine Lagervorrichtung für eine Kopfstütze eines Fahrzeugsitzes. Die Kopfstütze umfasst ein Kopfanlageteil zum Abstützen des Kopfes eines in dem Fahrzeugsitz befindlichen Sitzinsassen. Das Kopfanlageteil ist mit wenigstens einer Tragstange an einer Fahrzeugstruktur gehalten, wobei die Fahrzeugstruktur z.B. von der Rückenlehne des Fahrzeugsitzes gebildet sein kann. Tragstange ist im Sinne der Erfindung auch das freie Ende eines Tragstangenbügels. Das Kopfanlageteil ist mit wenigstens einer Lagervorrichtung an der Tragstange gehalten und die Tragstange ist mit wenigstens einer Lagervorrichtung an der Fahrzeugstruktur gelagert.

In der DE 10 2011 100 819 B4 ist ein Kraftfahrzeugsitz mit einer Kopfstütze offenbart. Die Haltestangen der Kopfstütze sind hier in einem Lagerrahmen gelagert, der Lagerelemente aufweist. Anlagebereiche der Lagerelemente sind gegenüberliegend ausgebildet und wenigstens eines der Lagerelemente ist flexibel ausgebildet, um einen Kraftschluss mit der Haltestange herzustellen. Die Lagerelemente sind einem Lagerrahmen zugeordnet.

In der DE 10 2005 019 946 B4 ist eine Befestigungsvorrichtung für die Kopfstütze eines Fahrzeugsitzes beschrieben. Die Kopfstützenstangen sind in Führungshülsen gelagert, die jeweils in einer Aufnahmeeinrichtung des Fahrzeugsitzes gehalten sind. In den Führungshülsen sind elastische Federlaschen ausgebildet, welche die Kopfstützenstangen gegen Innenflächen der Führungshülsen drücken. Auf der Führungshülse ist ein Federelement angebracht, das sich an der Führungshülse abstützt und eine Klemmkraft auf die Kopfstützenstange ausübt.

Die DE 196 08 851 C2 betrifft eine Führungshülse, bei welcher ebenfalls ein Federelement auf eine federnde Zunge der Führungshülse eine radiale Kraft ausübt, so dass die Zunge gegen die Tragstange belastet wird.

In der DE 10 2005 043 811 B4 ist eine Kopfstütze beschrieben, deren Tragstange in einer Führungsstruktur der Rückenlehne gelagert ist. Die Führungsstruktur hält wenigstens ein Lagerelement, welches eine zur Tragstange hin vorragende Lagerfläche bildet.

Die DE 10 2010 041 878 A1 beschreibt eine Kopfstütze, wobei eine Tragstange der Kopfstütze mit Lagerelementen gelagert ist, die an einem Polsterträger der Kopfstütze gehalten und elastisch in Richtung der Tragstange vorgespannt sind. Die Vorspannung wird durch eine Bügelfeder erzeugt, welche sich an einer Außenseite des polsterträgerfesten Lagerelements abstützt und die freien Enden radial einwärts drückt. Die Lagerelemente weisen an einem inneren Umfang Führungsstege auf, die zur Tragstange hin vorragen.

Es ist Aufgabe der Erfindung, eine Lagervorrichtung zu schaffen, welche Toleranzen in der Form der Tragstange und dem Abstand von zwei Tragstangenenden zueinander ausgleichen kann, wobei die Kopfstütze dennoch klapperfrei in der Lagervorrichtung gehalten ist.

Die Aufgabe wird zunächst gelöst durch eine Kopfstütze mit den Merkmalen des Anspruchs 1.

Die Lagervorrichtung ist zur Lagerung der Tragstange einer Kopfstütze für Fahrzeugsitze vorgesehen. Die Lagervorrichtung umfasst wenigstens einen Rahmen, welcher eine Öffnung ausbildet, die von einer Tragstange durchgriffen werden kann und wenigstens einen Kontaktbereich, welcher zur Anlage an der Außenfläche der Tragstange vorgesehen ist. Insbesondere weist die Lagervorrichtung wenigstens zwei Kontaktbereiche auf. Es können z.B. zwei, drei oder vier Kontaktbereiche vorgesehen sein. Die Kontaktbereiche können z.B. gleichmäßig über den Umfang der Tragstange verteilt angeordnet sein. Gemäß einer Ausführungsform ist wenigstens ein erster Kontaktbereich mechanisch unabhängig von mindestens einem zweiten Kontaktbereich gelagert und lässt sich in radialer Richtung bewegen.

Die von einem Kontaktbereich auf die Tragstange ausgeübte Kraft wird z.B. von wenigstens einem anderen Kontaktbereich, der ein Widerlager bildet, wenigstens teilweise aufgenommen. Auf diese Weise ist die Tragstange schwimmend in der Führungsstruktur gelagert.

Die Führungsstruktur kann z.B. sitzfest oder kopfanlageteilfest ausgebildet sein. Die Führungsstruktur kann z.B. von einer Lagerhülse oder einer den Umfang der Tragstange wenigstens teilweise umgreifenden Struktur ausgebildet sein, die mit der Rückenlehne oder mit dem Kopfanlageteil verbunden ist. "Verbunden" bedeutet kann in diesem Sinne z.B. "daran befestigt" oder "einstückig damit ausgebildet" bedeuten. Die Struktur kann z.B. derart ausgebildet sein, dass sie Kräfte, die in Richtung von wenigstens zwei Raumachsen wirken, aufnehmen kann.

Der Kontaktbereich ist einem Verbindungselement zugeordnet. Das Verbindungselement ist mit einem Haltebereich der Führungsstruktur verbunden. Das bedeutet im Sinne der Erfindung, dass mittels des Verbindungselements Zug- und / oder Druckkräfte zwischen dem Kontaktbereich und der Führungsstruktur übertragen werden können. Der Haltebereich ist z.B. von einer die Öffnung begrenzenden Wand des Rahmens gebildet. Der Haltebereich kann unmittelbar von der Führungsstruktur oder von einem gesonderten Element ausgebildet sein.

Das Verbindungselement ist z.B. elastisch und radial bewegbar ausgebildet. Auf diese Weise lässt sich der Kontaktbereich zur Tragstange und von der Tragstange wegbewegen. Die Elastizität kann von der Form und dem Material des Verbindungselements abhängen. Gemäß einer alternativen Ausführung oder zusätzlich ist das Verbindungselement bewegbar an dem Haltebereich gelagert. In diesem Fall kann es z.B. von einer Feder radial in die Öffnung belastet werden.

Das Verbindungselement ist z.B. von einem Arm gebildet, welchem der Kontaktbereich zugeordnet ist. Der Arm erstreckt sich z.B. von dem Haltebereich an der Führungsstruktur in die Öffnung. Er kann sich z.B. von einer die Öffnung begrenzenden Wand in die Öffnung erstrecken. Der Arm kann sich z.B. alternativ oder zusätzlich in Umfangsrichtung, um die Öffnung erstrecken. Der Arm erstreckt sich dann auch um wenigstens einen Teil des Außenumfangs der Tragstange, welche die Öffnung durchgreift. Der Arm ist z.B. fest mit dem Kontaktbereich verbunden. Insbesondere ist der Kontaktbereich Teil des Arms, also einstückig mit diesem ausgebildet. Der Arm ist z.B. mit dem Haltebereich fest verbunden. Insbesondere ist der Arm an den Rahmen angeformt.

Der Arm ist gemäß einer Ausführungsform elastisch verformbar ausgebildet. Auf diese Weise ist er radial beweglich und kann zur Tragstange hin und von der Tragstange wegbewegt werden. Wenn sich eine Tragstange in der Führungsstruktur befindet ist der Arm z.B. aufgrund einer Übermaßpassung zwischen der Außenfläche der Tragstange und dem Kontaktbereich elastisch radial aus seiner Ruheposition verdrängt und übt eine Vorspannkraft gegen den Kontaktbereich aus, so dass der Kontaktbereich in Anlage an die Außenfläche belastet ist. Gemäß einer Alternative oder zusätzlich ist der Arm z.B. bewegbar an dem Haltebereich gelagert und von einer Feder radial in die Öffnung belastet.

Gemäß einer Ausführungsform wirkt eine Feder unmittelbar oder mittelbar auf den Kontaktbereich und belastet den Kontaktbereich gegen die Außenfläche der Tragstange. Die Federkraft der Feder kann z.B. auf das Verbindungselement wirken. Die Feder übt z.B. eine Kraft auf mehrere Kontaktbereiche aus, und belastet diese gegen die Tragstange. Alle Kontaktbereiche sind z.B. von der Feder gleichmäßig belastet. Die Feder kann z.B. die elastische Rückstellkraft des Verbindungselements unterstützen. Die Federkraft der Feder wirkt z.B. in dieselbe Richtung wie die elastische Rückstellkraft des Verbindungselements.

Die Anlagefläche des Ringelements an dem Kontaktbereich und /oder dem Verbindungselement ist z.B. als Rampe ausgebildet. Damit kann eine erhöhte Federkraft auf den Kontaktbereich oder bestimmte Bereiche des Verbindungselements ausgeübt werden.

Als Material für die Feder kommen alle geeigneten Materialien, wie z.B. Silikon, Metall, Kunststoff in Betracht. Auch unterschiedliche Formen, wie z.B. Schraubenfeder, einfacher Ring, sind möglich.

Die Federlänge wirkt sich auf die Federkennlinie aus. Mit einer großen Federlänge kann z.B. eine flache Federkennlinie, d.h. ein geringes Verhältnis von Federkraft zu Federweg, erzielt werden. Der Einfluss auf die Normalkraft, die auf die Haltestange wirkt, ist dann bei unterschiedlichen Toleranzen und Temperaturen gering. Die Verstellkräfte bleiben etwa konstant.

Einer weiteren Ausgestaltung der Erfindung gemäß ist die Feder als Ringfeder ausgebildet. Ringfeder bedeutet im Sinne der Erfindung, dass die Feder als geschlossener Ring oder als offener Ring ausgebildet ist, welcher die Öffnung bzw. den Umfang der Tragstange wenigstens teilweise umschließt. Die Ringfeder übt z.B. eine gleichmäßig über den Umfang verteilte Kraft auf die Kontaktbereiche auf. Die Ringfeder stützt sich z.B. nicht an der Fahrzeugstruktur ab, sondern lediglich an der Tragstange. Gemäß einer alternativen Ausführungsform stützt sich das Ringelement wenigstens teilweise an der Fahrzeugstruktur ab. Eine Verbindung der Kontaktbereiche erfolgt z.B. über die Ringfeder. Mittels der Ringfeder kann die Bewegung der Kontaktbereiche z.B. miteinander gekoppelt werden. Kräfte, die auf einen Kontaktbereich wirken, können mittels der Ringfeder auf andere Kontaktbereiche übertragen werden.

Gemäß einer Ausgestaltung der Erfindung umgreift die Ringfeder den Kontaktbereich und / oder das Verbindungselement wenigstens teilweise. Z.B. umgreift die Ringfeder alle Kontaktbereiche und / oder alle Verbindungselemente. Der Kontaktbereich oder das Verbindungselement mit dem Kontaktbereich kann z.B. von der Ringfeder in Kontakt mit der Außenfläche der Tragstange belastet werden. Wenn das Verbindungselement als Arm ausgebildet ist, der sich in Umfangsrichtung um die Öffnung erstreckt, kann die Feder über die gesamte Länge an dem Arm anliegen und den Arm radial in Richtung der Öffnung bzw. der Tragstange belasten.

Einer weiteren Ausgestaltung der Erfindung gemäß heben sich die von den Kontaktbereichen auf die Außenfläche der Tragstange ausgeübten Kräfte auf. Das ist z.B. dann möglich, wenn wenigstens zwei Kontaktbereiche um 180° versetzt oder wenigstens drei Kontaktbereiche um 120° versetzt am Außenumfang anliegen und die von den Kontaktbereichen auf die Außenfläche der Tragstange ausgeübten Kräfte gleich groß sind und so gerichtet sind, dass sie sich aufheben. Gemäß einer weiteren Ausgestaltung der Erfindung belastet die Ringfeder wenigstens zwei Kontaktbereiche derart, dass die Tragstange innerhalb der Öffnung zentriert wird.

Eine Ausgestaltung der Erfindung ist dadurch gekennzeichnet, dass der Rahmen Teil einer Führungsstruktur ist, z.B. an die Führungsstruktur angeformt ist. Gemäß einer alternativen Ausführung ist der Rahmen an der Führungsstruktur befestigt. Z.b. ist der Rahmen als Einsatz ausgebildet ist, welcher an der Führungsstruktur befestigbar ist.

Der Einsatz kann z.B. in einem Sitz der Führungsstruktur befestigbar, insbesondere verrastbar, sein. Der Einsatz kann z.B. in Form einer Kassette ausgebildet sein, die in dem Sitz der Führungsstruktur befestigt werden kann. Das Ringelement kann auf diese Weise einfach montiert werden.

Die Erfindung betrifft gemäß einem zweiten Aspekt eine Kopfstütze mit einem Kopfanlageteil, welches mittels wenigstens einer Tragstange an der Fahrzeugstruktur, insbesondere der Rückenlehne eines Fahrzeugsitzes, gehalten ist. Die Kopfstütze weist Lager auf, mit denen das Kopfanlagteil auf der Tragstange gelagert ist. Die Lagerung kann z.B. eine Höhenverstellung des Kopfanlageteils ermöglichen, also eine Relativbewegung zwischen Kopfanlageteil und Tragstange. Des Weiteren ist die Tragstange in einem Lager gehalten, welches fest an der Fahrzeugstruktur befestigt ist.

Es war Aufgabe der Erfindung, eine Kopfstütze zu schaffen, bei welcher das Kopfanlageteil auch bei Abweichungen der Maße der Tragstangen sowie bei einer Abweichung des Abstandes von ggf. zwei Tragstangen funktionssicher und klapperfrei gelagert ist. Die Aufgabe wurde gelöst durch eine Kopfstütze mit den Merkmalen des Anspruchs 11.

Die Kopfstütze weist die Besonderheit auf, dass das Kopfanlageteil mit wenigstens einer oben beschriebenen Lagervorrichtung gelagert ist. Um Wiederholungen zu vermeiden wird bezüglich der Vorteile der Erfindung auf die Ausführungen verwiesen, die zu der erfindungsgemäßen Lagervorrichtung gemacht wurden.

Weitere Vorteile der Erfindung ergeben sich anhand der Beschreibung eines in den Fig. dargestellten Ausführungsbeispiels. In den schematischen Fig. zeigen:
Fig. 1 eine Hinteransicht einer Kopfstütze, wobei eine hintere Schale des Kopfanlageteils nicht dargestellt ist.
Fig. 2 eine Schnittdarstellung gemäß Schnittlinie II - II in Fig. 1, wobei das Kopfanlageteil nicht dargestellt ist,
Fig. 3 eine Schnittdarstellung gemäß Schnittlinie III - III in Fig. 2,
Fig. 4 eine Draufsicht auf die Lagervorrichtung,
Fig. 5 eine Ansicht gemäß Ansichtspfeil V in Fig. 4,
Fig. 6, eine Ansicht gemäß Ansichtspfeil VI in Fig. 5,
Fig. 7 eine perspektivische Darstellung der in Fig. 6 gezeigten Unterseite der Lagervorrichtung,
Fig. 8 eine perspektivische Darstellung der in Fig. 4 darstellten Oberseite der Lagervorrichtung, und
Fig. 9 eine Draufsicht auf die Feder in Einzelteildarstellung,
Fig. 10 eine Hinteransicht einer zweiten Ausführungsform der Kopfstütze.

Die erfindungsgemäße Lagervorrichtung insgesamt wird in den Zeichnungen mit dem Bezugszeichen 10 bezeichnet. Gleiche Bezugszeichen in den unterschiedlichen Fig. bezeichnen, auch wenn kleine Buchstaben nachgestellt oder weggelassen sind, entsprechende Teile.

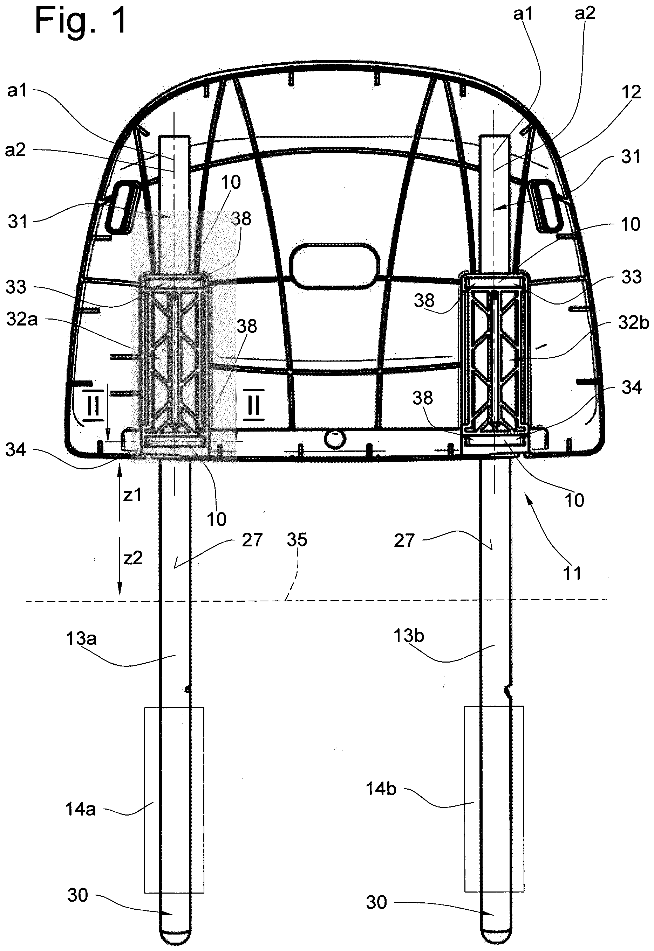

Die Lagervorrichtung 10 ist zur Lagerung eines in Fig. 1 dargestellten Kopfanlageteils 12 einer Kopfstütze 11 vorgesehen. In Fig. 1 ist eine hintere Ansicht der Kopfstütze 11 gezeigt. Die Kopfstütze 11 umfasst das Kopfanlageteil 12 sowie Tragstangen 13a und 13b. Mittels der Tragstangen 13a und 13b ist das Kopfanlageteil 12 an der Rückenlehne 35 eines nicht näher dargestellten Fahrzeugsitzes gelagert. In Fig. 1 ist eine hintere Halbschale des zwei Halbschalen aufweisenden Kopfanlageteils 12 nicht gezeigt. Das Kopfanlageteil 12 kann z.B. relativ zu den Tragstangen 13a und 13b in Richtung z1 und z2 verstellt werden.

Ein Endbereich 30 der Tragstange 13a greift in ein Lager 14a und ein Endbereich 30 der Tragstange 13b greift in ein Lager 14b. Jedes Lager 14a und 14b ist an der Struktur der Rückenlehne 35 befestigt. Die Endbereiche 30 der Tragstangen 13a und 13b sind in dem jeweiligen Lager 14a und 14b befestigt, z.B. lösbar verrastet. Die Lager 14a und 14b sind z.B. als Hülsen ausgebildet.

Ein oberer Endbereich 31 der Tragstange 13a ist in einer Führungsstruktur 32a des Kopfanlageteils 12 gelagert und ein oberer Endbereich 31 der Tragstange 13b ist in einer Führungsstruktur 32b des Kopfanlageteils 12 gelagert. Jede Führungsstruktur 32a und 32b ist fest mit dem Kopfanlageteil 12 verbunden und umfasst einen oberen Lagersitz 33 sowie einen unteren Lagersitz 34, in welchem ein Einsatz 38 mit der Lagervorrichtung 10 befestigt ist.

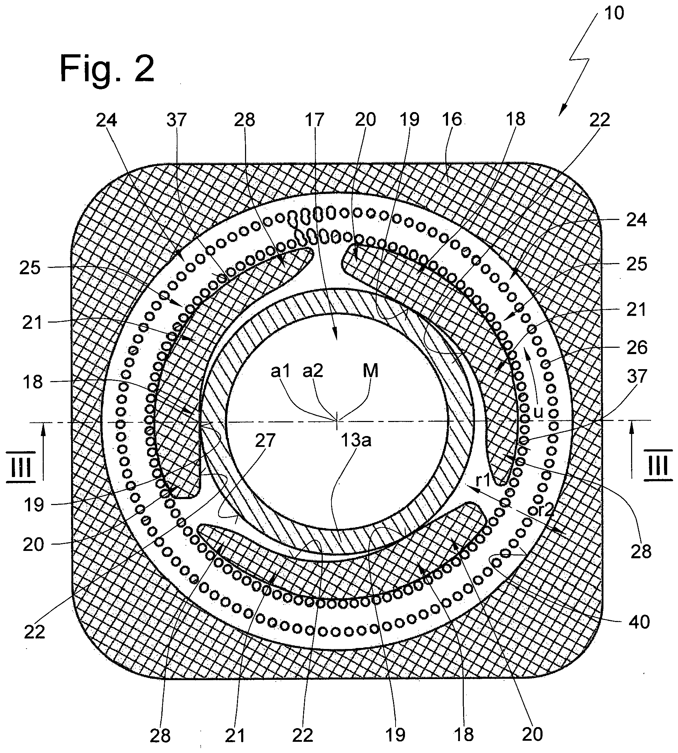

Eine Schnittansicht des Einsatzes 38 ist in Fig. 2 dargestellt. Der Einsatz 38 umfasst einen Rahmen 16, welcher eine Öffnung 17 ausbildet. Die Tragstange 13a durchgreift die z.B. kreisförmige Öffnung 17. Der Rahmen 16 umschließt die Öffnung 17 vollständig. In die Öffnung 17 ragen radial drei elastisch verformbare Arme 21 hinein, die jeweils einen Kontaktbereich 18 mit einer Kontaktfläche 19 aufweisen. Der Kontaktbereich 18 ist an einem freien Endbereich 20 des Arms 21 angeordnet.

An einem Haltebereich 28 einer die Öffnung 17 begrenzenden Innenfläche 40 ist jeder Arm 21 mit dem Rahmen 16 verbunden. Im vorliegenden Ausführungsbeispiel ist der Arm 16 einstückig mit dem Rahmen 16 ausgebildet. Jeder Arm 21 erstreckt sich von dem Haltebereich 28 in Umfangsrichtung u um einen Mittelpunkt M der Öffnung 17. Darüber hinaus erstreckt sich jeder Arm 21 radial in Richtung r1 zu der Tragstange 13a. Die Arme 21 sind unabhängig voneinander an dem Rahmen 16 gelagert und die freien Endbereiche 20 lassen sich unabhängig voneinander radial in die Richtungen r1 und r2 bewegen.

Eine der Öffnung 17 zugewandte Laibung 22 der Lagervorrichtung 10 ist von den Armen 21 gebildet. Auf einer von der Laibung 22 abgewandten Seite 23 des Arms 21 ist eine Aussparung 24 ausgebildet, die sich in Umfangsrichtung u um den Mittelpunkt M erstreckt. Der Arm 21 kann auf diese Weise radial nach außen in Richtung r2 federn.

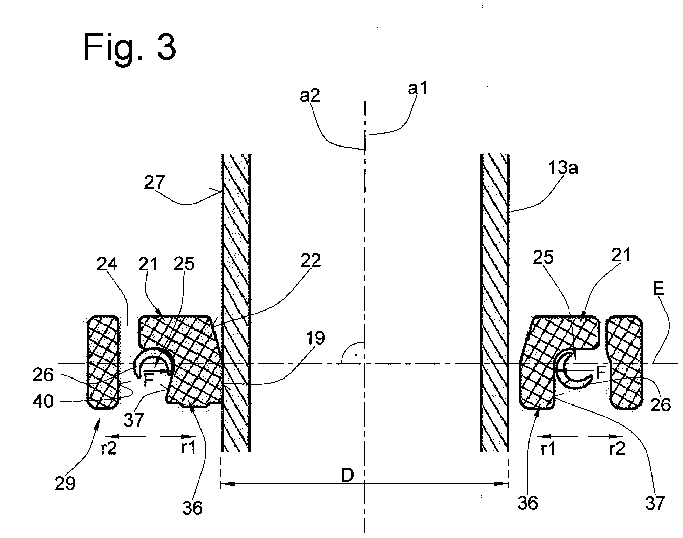

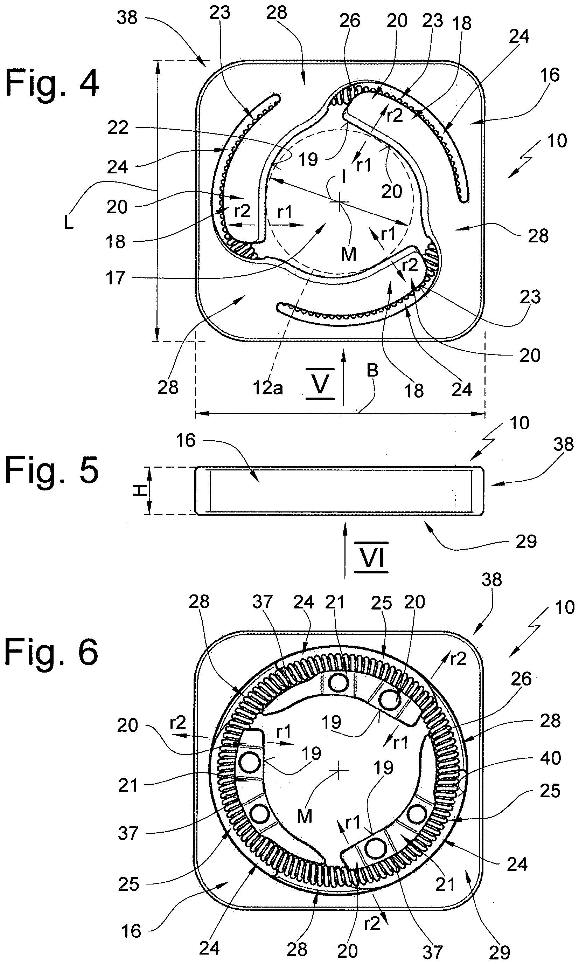

In Fig. 4 ist der Einsatz 38 mit der Lagervorrichtung 10 als Einzelteil dargestellt. Der Innendurchmesser I der Laibung 22 ist der Durchmesser eines Kreises um den Mittelpunkt M, der die Kontaktfläche 19 tangiert. Wird die Tragstange 13a montiert, weist der Außendurchmesser D der Tragstange 13a (siehe Fig. 3) bezüglich des Innendurchmessers I (siehe Fig. 4) ein Übermaß auf. Die Arme 21 sind aus diesem Grunde in Richtung r2 verformt, wodurch die Kontaktfläche 19 aufgrund der elastischen Rückstellkraft des Arms 21 in Richtung r1 an eine Außenfläche 27 der Tragstange 13a gedrückt wird.

Jeder Arm 21 weist auf einer Unterseite 29 eine Aussparung 25 auf, die einen Montagesitz bildet (siehe z.B. die Fig. 2 und 3). Aufgrund der Aussparung 25 ragt an jedem Arm 21 ein Steg 36 parallel zu einer Längsmittelachse a1 der Führungsstruktur 14a vor, welcher eine Anlagefläche 37 bildet. Die Anlagefläche 37 hat die Form eines Kreisbogens. In dem Montagesitz 25 ist eine ringförmige Feder 26 angeordnet. Die Feder 26 ist z.B. von einer Schraubenfeder gebildet, deren Enden aneinander befestigt sind. Alternativ kann die Feder 26 aber z.B. auch von einem Silikonring oder anderen geeigneten Federn gebildet sein. Die Feder 26 liegt etwa über die gesamte Längserstreckung des Arms 21 an der Anlagefläche 37 an und übt eine radiale Kraft F auf die Anlagefläche 37 in Richtung r1 aus und belastet damit alle Kontaktflächen 19 gleichmäßig in Richtung r1 gegen die Außenfläche 27 der Tragstange 13a.

In Fig. 3 ist zu erkennen, dass die Längsmittelachse a1 der Führungsstruktur 14a durch den Mittelpunkt M der kreisförmigen Öffnung 17 verläuft. Eine Längsmittelachse a2 der Tragstange 13a fällt im Ausführungsbeispiel mit der Längsmittelachse a1 zusammen. Es ist in den Fig. 3 und 4 zu erkennen, dass der Einsatz 38 eine Platte bildet, welche sich in einer Ebene E quer zu der Längsmittelachse a2 der Tragstange 13a erstreckt, also einen rechten Winkel mit Längsmittelachse a2 bildet.

In jeder Position der Tragstange 13a relativ zu den Armen 21 werden die Kontaktflächen 19 an der Außenfläche 27 gehalten, so dass die Kopfstütze 11 klapperfrei gelagert ist. Die Tragstange 13a wird nicht in eine bestimmte Richtung an den Rahmen 16 bzw. an die Führungsstruktur gedrückt. Sie ist schwimmend in der Öffnung 17 gelagert. Auch in dem Fall, dass die Längsmittelachse a2 einen Abstand zu der Längsmittelachse a1 aufweist, die Tragstange 13a also nicht zentrisch in der Öffnung 17 angeordnet ist, werden die Kontaktflächen 19 an der Außenfläche 27 gehalten.

In den Fig. 2 und 3 sind Schnittansichten des Einsatzes 38 gezeigt, der in dem Lagersitz 33 zur Lagerung der Tragstange 13a vorgesehen ist. Die zu diesem Einsatz 38 gemachten Ausführungen gelten in gleicher Weise für alle anderen Einsätze 38, d.h. für den in dem Lagersitz 34 der Führungsstruktur 32a befindlichen Einsatz 38, die in die den Lagersitzen 33 und 34 der Führungsstruktur 32b befindlichen Einsätze.

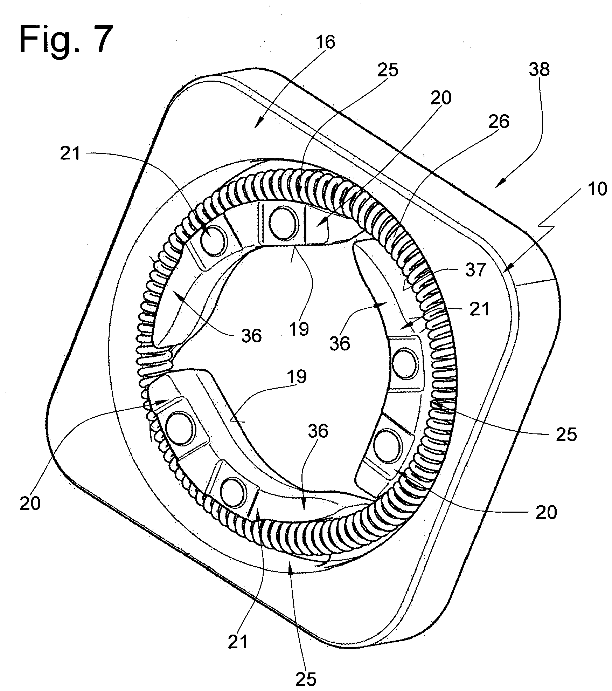

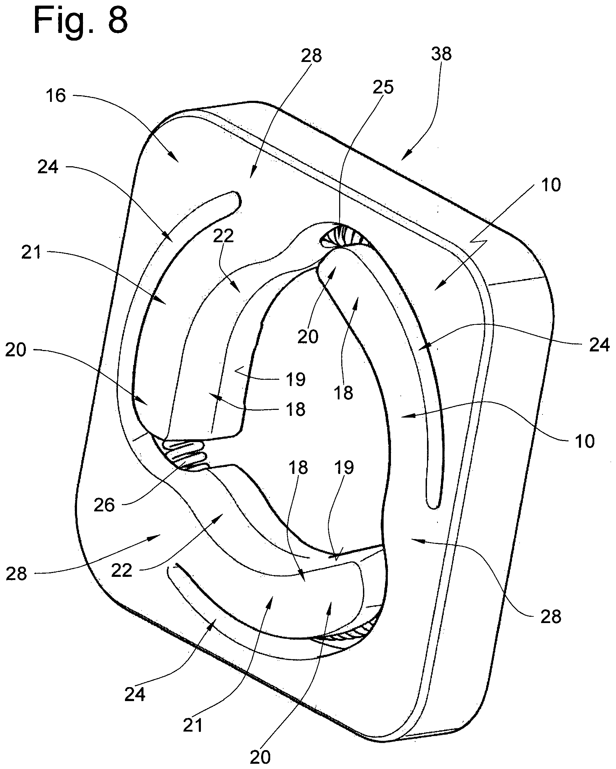

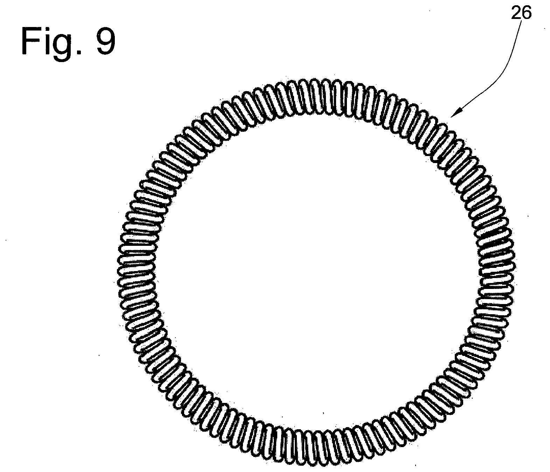

In den Fig. 4 bis 8 ist der Einsatz 38 als Baugruppe dargestellt. Aus Fig. 4 wird deutlich, dass der Einsatz 38 drei Arme 21 aufweist, die jeweils etwa 120° der Öffnung 17 umspannen und an ihren Endbereichen 20 den Kontaktbereich 18 ausbilden. Die Kontaktbereiche 18 sind um 120° zueinander versetzt angeordnet. In Fig. 5 ist die Höhe H des Einsatzes 38 dargestellt, die im Verhältnis zur Länge L und Breite B klein ist. Insbesondere ist in Fig. 6 ist erkennbar, dass die Feder 26 im Wesentlichen über die gesamte Länge des Arms 21 an der Anlagefläche 37 anliegt. In Fig. 9 ist eine Draufsicht auf die Feder 26 als Einzelteil dargestellt.

Nicht nur bei toleranzbedingter Abweichung der Sollposition der Tragstangen 13a liegt die Kontaktfläche 19 an der Außenfläche 27 an und verhindert das Klappern der Kopfstütze 11. Das Kopfanlageteil 12 ist auch bei Abweichungen in Bezug auf die Tragstangenform oder Abweichungen des Soll-Abstandes zwischen den Tragstangen 13a und 13b sicher auf den Tragstangen 13a und 13b gelagert.

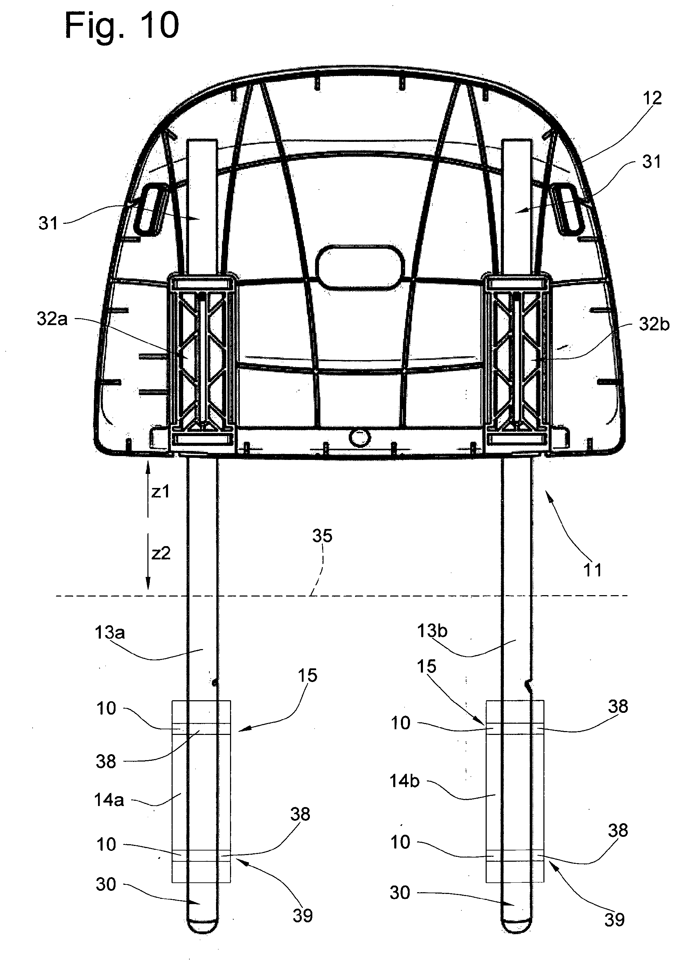

Gemäß einer alternativen, in Fig. 10 dargestellten Ausführungsform sind die Tragstangen 13a und 13b fest mit dem Kopfanlageteil 12 verbunden, z.B. verrastet. Das Kopfanlageteil 12 ist in die Richtungen z1, z2 unbewegbar. Die Tragstangen 13a und 13b sind relativ zu den Führungsstrukturen 14a und 14b in die Richtungen z1, z2 bewegbar. Jede Führungsstruktur 14a und 14b weist einen oberen Lagersitz 15 und einen unteren Lagersitz 39 auf. In jedem Lagersitz 15 und 39 ist ein Einsatz 38 mit der Lagervorrichtung 10 angeordnet.

## Patentansprüche

1. Lagervorrichtung für eine Tragstange (13a, 13b) einer Kopfstütze (11) für Fahrzeugsitze, mit wenigstens einem Rahmen (16), welcher eine Öffnung (17) ausbildet, die von der Tragstange (13a, 13b) durchgriffen werden kann, wobei der Rahmen (16) die Öffnung (17) wenigstens teilweise umgreift, wobei die Lagervorrichtung (10) wenigstens zwei Kontaktbereiche (18) zur Anlage an der Außenfläche (27) der Tragstange (13a, 13b) aufweist, die mit einem elastisch bewegbaren Verbindungselement mit einem Haltebereich (28) verbunden ist, welcher an dem Rahmen (16) ausgebildet ist, **dadurch gekennzeichnet, dass** die Kontaktbereiche mit dem Rahmen derart bewegbar verbunden sind, dass die Tragstange relativ zu dem Rahmen schwimmend innerhalb der Öffnung bewegbar gelagert ist.

2. Lagervorrichtung nach Anspruch 1, **dadurch gekennzeichnet, dass** das Verbindungselement von einem Arm (21) gebildet ist, welchem der Kontaktbereich (18) zugeordnet ist.

3. Lagervorrichtung nach Anspruch 2, **dadurch gekennzeichnet, dass** der Arm (21) elastisch verformbar ausgebildet ist.

4. Lagervorrichtung nach Anspruch 2 oder 3, **dadurch gekennzeichnet, dass** sich der Arm (21) in Umfangsrichtung (u) um die Öffnung (17) erstreckt und eine Laibung (22) der Öffnung (17) wenigstens teilweise ausbildet.

5. Lagervorrichtung nach einem der vorangehenden Ansprüche, **dadurch gekennzeichnet, dass** eine Feder (26) auf den Kontaktbereich (18) wirkt und den Kontaktbereich (18) radial in Richtung (r1) der Öffnung (17) belastet.

6. Lagervorrichtung nach Anspruch 5, **dadurch gekennzeichnet, dass** die Feder (26) als Ringfeder ausgebildet ist, welche die Öffnung (17) wenigstens teilweise umschließt.

7. Lagervorrichtung nach Anspruch 5 oder 6, **dadurch gekennzeichnet, dass** die Feder (26) den Kontaktbereich und / oder das Verbindungselement wenigstens teilweise umgreift.

8. Lagervorrichtung nach einem der Ansprüche 5 bis 7, **dadurch gekennzeichnet, dass** die Feder (26) wenigstens zwei Kontaktbereiche (18) derart belastet, dass die innerhalb der Öffnung (17) zentriert werden kann.

9. Lagervorrichtung nach einem der vorangehenden Ansprüche, **dadurch gekennzeichnet, dass** der Rahmen (16) Teil einer Führungsstruktur ist oder als Einsatz (38) ausgebildet ist, welcher an der Führungsstruktur (14a, 14b, 32a, 32b) befestigbar ist.

10. Kopfstütze (11) mit einer Lagervorrichtung (10) gemäß einem der vorhergehenden Ansprüche, mit einem Kopfanlageteil (12), welches mittels wenigstens einer Tragstange (13a, 13b) an einem Fahrzeugsitz lagerbar ist, wobei der Rahmen (16) einer Führungsstruktur (14a, 14b, 32a, 32b) zugeordnet ist, die dem Kopfanlageteil (12) zugeordnet ist oder an einem Fahrzeugsitz befestigbar ist.

## Claims

1. Bearing device for a support rod (13a, 13b) of a headrest (11) for vehicle seats, comprising at least one frame (16) which forms an opening (17) through which the support rod (13a, 13b) can pass, wherein the frame (16) at least partially wraps around the opening (17), wherein the bearing device (10) has at least two contact regions (18) for bearing against the outer surface (27) of the support rod (13a, 13b), which is connected by an elastically movable connecting element to a holding region (28) that is formed on the frame (16), **characterized in that** the contact regions are movably connected to the frame in such a way that the support rod is mounted floatingly within the opening such as to be movable relative to the frame.

2. Bearing device according to claim 1, **characterized in that** the connecting element is formed by an arm (21), to which the contact region (18) is assigned.

3. Bearing device according to claim 2, **characterized in that** the arm (21) is elastically deformable.

4. Bearing device according to claim 2 or 3, **characterized in that** the arm (21) extends in the circumferential direction (u) around the opening (17) and at least partially forms a reveal (22) of the opening (17).

5. Bearing device according to any one of the preceding claims, **characterized in that** a spring (26) acts on the contact region (18) and biases the contact region (18) radially in the direction (r1) of the opening (17).

6. Bearing device according to claim 5, **characterized in that** the spring (26) is configured as an annular spring which at least partially surrounds the opening (17).

7. Bearing device according to claim 5 or 6, **characterized in that** the spring (26) at least partially wraps around the contact region and/or the connecting element.

8. Bearing device according to any one of claims 5 to 7, **characterized in that** the spring (26) biases at least two contact regions (18) such that they can be centred within the opening (17).

9. Bearing device according to any one of the preceding claims, **characterized in that** the frame (16) is part of a guide structure or is configured as an insert (38) which can be attached to the guide structure (14a, 14b, 32a, 32b).

10. Headrest (11) having a bearing device (10) according to any one of the preceding claims, having a head bearing part (12) which can be mounted on a vehicle seat by means of at least one support rod (13a, 13b), wherein the frame (16) is assigned to a guide structure (14a, 14b, 32a, 32b), which is assigned to the head bearing part (12) or can be attached to a vehicle seat.

## Revendications

1. Dispositif de stockage pour une tringlerie de support (13a, 13b) d'un appuie-tête (11) pour des sièges de véhicule, avec au moins un châssis (16), lequel forme une ouverture (17), qui peut être accrochée de façon traversante par la tringlerie de support (13a, 13b), dans lequel le châssis (16) vient en prise autour de l'ouverture (17) au moins en partie, dans lequel le dispositif de stockage (10) présente au moins deux zones de contact (18) pour le placement contre la surface externe (27) de la tringlerie de support (13a, 13b), qui est reliée à une zone de retenue (28) avec un élément de liaison mobile élastiquement, qui est formée sur le châssis (16), **caractérisé en ce que** les zones de contact sont reliées au châssis de manière mobile de telle sorte que la tringlerie de support est placée mobile au sein de l'ouverture, flottante par rapport au châssis.

2. Dispositif de stockage selon la revendication 1, **caractérisé en ce que** l'élément de liaison est formé d'un bras (21) auquel est associée la zone de contact (18).

3. Dispositif de stockage selon la revendication 2, **caractérisé en ce que** le bras (21) est réalisé élastiquement déformable.

4. Dispositif de stockage selon la revendication 2 ou 3, **caractérisé en ce que** le bras (21) s'étend dans la direction périphérique (u) autour de l'ouverture (17) et **en ce qu'**est réalisée une concavité (22) de l'ouverture (17) au moins en partie.

5. Dispositif de stockage selon l'une des précédentes revendications, **caractérisé en ce qu'**un ressort (26) agit sur la zone de contact (18) et contraint la zone de contact (18) radialement dans le sens (r1) de l'ouverture (17).

6. Dispositif de stockage selon la revendication 5, **caractérisé en ce que** le ressort (26) est réalisé en tant que ressort annulaire lequel entoure l'ouverture (17) au moins en partie.

7. Dispositif de stockage selon la revendication 5 ou 6, **caractérisé en ce que** le ressort (26) enserre la zone de contact et/ou l'élément de liaison au moins en partie.

8. Dispositif de stockage selon l'une des revendications 5 à 7, **caractérisé en ce que** le ressort (26) contraint au moins deux zones de contact (18) de telle sorte qu'il peut être centré au sein de l'ouverture (17).

9. Dispositif de stockage selon l'une des précédentes revendications, **caractérisé en ce que** le châssis (16) est partie d'une structure de guidage ou est réalisé en tant qu'insert (38) lequel peut être fixé au niveau de la structure de guidage (14a, 14b, 32a, 32b).

10. Appuie-tête (11) comportant un dispositif de stockage (10) selon l'une des précédentes revendications, avec un élément de position de tête (12), lequel peut être placé au niveau d'un siège de véhicule au moyen, au moins, d'une tringlerie de support (13a, 13b), le châssis (16) étant associé à une structure de guidage (14a, 14b, 32a, 32b) qui est associée à l'élément de position de tête (12) ou peut être fixée à un siège de véhicule.
